(19) Europäisches Patentamt
European Patent Office
Office européen des brevets

(11) **EP 1 547 821 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(51) Int Cl.:
***B60C 17/04*** *(2006.01)*     ***B60C 17/06*** *(2006.01)*

(21) Anmeldenummer: **04030271.3**

(22) Anmeldetag: **21.12.2004**

(54) **Vorrichtung zur Verringerung der Impactenergie von Reifen- und Felgenbruchstücken**

Device to reduce impact energy from fractions of tires and rims

Dispositif d'absorption de l'énergie d'impact de fractions de pneus et jantes

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.12.2003 DE 10360486**

(43) Veröffentlichungstag der Anmeldung:
**29.06.2005 Patentblatt 2005/26**

(73) Patentinhaber: **Airbus Deutschland GmbH**
**21129 Hamburg (DE)**

(72) Erfinder: **Seack, Oliver**
**28203 Bremen (DE)**

(74) Vertreter: **Maiwald Patentanwalts GmbH**
**Elisenhof**
**Elisenstrasse 3**
**80335 München (DE)**

(56) Entgegenhaltungen:
**EP-A- 0 168 688      EP-A- 0 663 306**
**DE-A1- 19 728 601      GB-A- 1 217 353**
**US-A- 4 641 670      US-A- 4 794 970**

EP 1 547 821 B1

**Beschreibung**

Die vorliegende Erfindung betrifft eine Vorrichtung zur Verringerung der Impactenergie von Reifen- und Felgenbruchstücken, umfassend eine Felge mit einem darauf montierten pneumatischen Reifen, dessen Hohlraum mit einem Gasvolumen gefüllt ist, wobei im Inneren des Reifenhohlraums ein mit der Felge verbundener Verdrängungskörper angeordnet ist, welcher keinen Kontakt zum Reifen aufweist.

Pneumatische Reifen an Fahrzeugen aller Art, wie Land- oder Luftfahrzeugen, sind während des Betriebs erheblichen Belastungen ausgesetzt. Bei den unter Druck stehenden Reifen reichen oft schon kleinere Beschädigungen der Lauffläche und/oder der Flanken des Reifens, um bei plötzlich auftretenden mechanischen Belastungen, wie z. B. dem Überrollen von auf der Fahrbahn liegenden Gegenständen, den Reifen zum Platzen zu bringen. Hierbei können Reifenbruchstücke entstehen, die aufgrund des inneren Drucks und der auftretenden Zentrifugalkräfte mit erheblicher Geschwindigkeit weggeschleudert werden und umliegende Fahrzeugteile, Gegenstände, wie auch Personen, beim Auftreffen mit Hochgeschwindigkeit erheblich beschädigen bzw. gefährden können. Insbesondere bei Flugzeugen sind die Räder in der Start- und Landephase erheblichen Belastungen ausgesetzt, und im Falle eines Platzens eines Reifens geht von den Reifenbruchstücken eine erhebliche Gefahr aus. So wurde beispielsweise das schwere Flugzeugunglück der Concorde am 25. Juli 2000 in Paris durch einen auf der Fahrbahn liegenden Metallstreifen verursacht, der einen Reifen der startenden Concorde beschädigte und zum Platzen brachte. Ein Bruchstück des Reifens wiederum beschädigte die Tragflügelunterseite, so dass Treibstoff austrat, der sich am Triebwerk entzündete.

Neben der Möglichkeit des Platzens eines Reifens besteht grundsätzlich auch die Möglichkeit, dass infolge von Materialfehlern und/oder Beschädigungen die Reifenfelge selber versagt. Hierbei können Bruchstücke entstehen, die aufgrund ihrer größeren Dichte und unter Umständen auch größeren Masse als die Reifenbruchstücke eine erheblich höhere schädigende Wirkung aufweisen können als Reifenbruchstücke.

Die besondere Gefährdung besteht im Falle eines Platzens des unter Innendruck stehenden Reifens und/oder dem Bruch der Reifenfelge durch die explosionsartig beschleunigten Bruchstücke, die in der näheren Umgebung des Reifens große Schäden durch Impact hervorrufen können.

Die vorliegende Erfindung zielt darauf ab, die kinetische Energie der Bruchstücke zu verringern und hierdurch die Auswirkungen durch den Impact der Bruchstücke zu vermindern.

Aus dem Stand der Technik ist aus der Europäischen Patentanmeldung EP 1186448 ein pneumatischer Flugzeugreifen bekannt, der mithilfe von Sollbruchstellen in Segmente definierter Größe unterteilt wird. Nach der Lehre dieser Patentanmeldung soll durch geeignete Wahl und Anordnung der Sollbruchstellen die Größe der Bruchstücke bei einem evtl. Reifenplatzer und damit auch ihre Impactenergie limitiert werden.

Der Nachteil dieser Erfindung ist, dass sie nur für den Fall des Reifenversagens wirksam wird. Im Falle des Felgenversagens bleibt die vorgeschlagene Unterteilung des Reifens in Segmente unwirksam. Ein weiterer Nachteil dieser Erfindung ist die hohe erforderliche Fertigungsgenauigkeit, um sicherzustellen, dass alle Sollbruchstellen gleichzeitig versagen, damit sich wirklich nur Teile mit der durch die Segmente definierten minimalen Größe vom Reifen lösen. Problematisch ist ferner, dass eine Schädigung am Reifen und ein daraus resultierendes Versagen immer lokal anfängt und nicht gleichzeitig an mehreren Stellen. Dies liegt u. a. nicht nur an bauteilspezifischen Unregelmäßigkeiten, sondern auch daran, dass die zum Versagen führende Belastung nur lokal wirksam sein kann, wie das Metallstück, das letztendlich die konkrete Ursache für den Absturz der Concorde darstellte. Es ist daher unwahrscheinlich, dass in der Praxis hergestellt werden kann, dass die Sollbruchstellen, wie in der EP 1186448 vorgesehen, in der angestrebten Weise funktionieren und im Falle des Reifenversagens tatsächlich zur Ausbildung von Bruchstücken exakt definierter Größe führen. Eine wirkungsvolle Limitierung der kinetischen Energie der Bruchstücke ermöglicht die Lehre der EPA 1186448 daher nicht.

Darüber hinaus sind dem Stand der Technik eine Vielzahl von Patenten und Patentanmeldungen bekannt, welche im gasgefüllten Innenraum eines Reifens elastische Körper vorsehen, um entweder durch eine effektive Aufdickung der Reifenwand das Risiko einer Beschädigung der Reifendecke durch spitze oder scharfe Gegenstände zu verringern, oder im Falle eines plötzlichen Druckverlustes dem Reifen gewisse Notlaufeigenschaften zu verleihen. Beispiele für derartigen Stand der Technik sind die EP 0912354B1, FR 1322887, FR 2013313 und FR 369680.

Keines dieser Patente erwähnt die Anordnung von Körpern innerhalb des luftgefüllten Reifens, um die im Reifen gespeicherte Druckenergie zu verringern und die Impactenergie von Reifen- oder Felgenbruchstücken im Falle des Platzens zu vermindern.

Ferner erwähnt keines dieser Patente die Anordnung von Körpern im Inneren des luftgefüllten Reifens, ohne Kontakt zum Reifen selbst.

Die DE 72 01 425 U offenbart als nächstliegener Stand der Technik eine Vorrichtung gemäß des Oberbegriffs des Anspruchs 1.

Die DE 25 44 474 A offenbart einen Stahlreifen der innerhalb des Gasvolumens des Reifens angeordnet ist. Dieser Reifen kann auch einstückig mit der Felge hergestellt sein.

Aus der DE 952 770 ist bekannt, dass neben einteiligen Reifen auch aus einzelnen Abschnitten herstellbar sind, etwa einzelnen Abschnitten einer Lauffläche und zwei Seitenteilen, wobei die Lauffläche in die Seitenteile jeweils eingehängt ist.

Ferner sieht die DE 316 621 einen Reifen vor, der mehrteilig aufgebaut ist. Der Reifen weist zwei Seitenteile auf , die durch eine Laufdecke überdeckt werden. Zur Befestigung der Seitenteile an den Laufdecken werden Verbindungsbleche verwendet.

Eine Aufgabe der vorliegenden Erfindung ist es, Maßnahmen zur effektiven Verringerung der kinetischen Energie von Reifen- oder Felgenbruchstücken im Falle eines Platzens des Reifens oder eines Versagens der Reifenfelge vorzuschlagen und hierdurch die Auswirkungen durch den Impact der Bruchstücke zu vermindern.

Ferner liegt eine weitere Aufgabe der vorliegenden Erfindung darin, Maßnahmen zur Verringerung der kinetischen Energie der Bruchstücke vorzuschlagen, die im Wesentlichen keine Auswirkungen auf die Lauf- und Dämpfungseigenschaften des pneumatischen Reifens aufweisen bzw. diese zu beeinträchtigen.

Diese Aufgabe wird ausgehend von einer Vorrichtung gemäß dem Oberbegriff des Anspruchs 1 in Verbindung mit dessen Kennzeichen und Merkmalen gelöst. Weitere Lösungsaspekte gemäß vorliegender Erfindung ergeben sich aus dem unabhängigen Verwendungsanspruch.

Vorteilhafte Weiterbildungen/Ausgestaltungen der Erfindung sind in den Unteransprüchen angegeben.

Die Erfindung schließt die technische Lehre ein, dass bei einer erfindungsgemäßen Vorrichtung zur Verringerung der Impactenergie von Reifen- und Felgenbruchstücken, umfassend eine Felge mit einem darauf montierten Reifen, dessen Hohlraum mit einem Gasvolumen gefüllt ist, im Inneren des Reifenhohlraums ein Verdrängungskörper angeordnet wird, der mit der Felge verbunden ist und keinen Kontakt zum Reifen aufweist. Diese Lösung führt dazu, dass die im Reifen gespeicherte Druckenergie durch eine Verringerung des innerhalb des Reifens wirksamen unter Überdruck stehenden Gasvolumens insgesamt verringert wird. Die im Reifen gespeicherte potentielle Druckenergie ist im Falle eines Versagens des Reifens und/oder der Felge, neben der aufgrund einer möglichen Rotation des Rades zusätzlich wirkenden Fliehkraft, als die maßgebliche Ursache für die Beschleunigung der Bruchstücke zu betrachten. Die potentielle Druckenergie des Gases wird im Falle des Versagens des Reifens und/oder der Felge durch Umströmungsvorgänge der Druckbruchstücke in die kinetische Energie dieser Bruchstücke selbst umgewandelt.

Die potentielle Energie Ep eines unter Überdruck stehenden Gasvolumens beträgt

$$(\text{Gl.1}) \qquad\qquad E_p = \Delta p * V$$

Dabei ist V das betrachtete Gasvolumen und $\Delta p$ der im Gasvolumen herrschende Differenzdruck zur Umgebung. Eine Verringerung des Gasvolumens V führt zu einer proportionalen Verringerung der im Gas gespeicherten potentiellen Energie Ep. Dadurch steht auch für die anschließende Umwandlung in die kinetische Energie der Bruchstücke entsprechend weniger Energie zur Verfügung, so dass die Geschwindigkeit der Bruchstücke sich ebenfalls verringern wird.

Der genaue Zusammenhang zwischen der potentiellen Energie des Gasvolumens und der kinetischen Energie der Bruchstücke basiert auf komplexen, stochastischen Prozessen, die durch den genauen Schädigungsverlauf des Reifens und/oder der Felge im Falle des Versagens sowie durch die relative Orientierung der Bruchstücke zum ausströmenden Gas beeinflusst werden. Dieser Zusammenhang ist im Wesentlichen unbekannt. Jedoch kann in erster Näherung angenommen werden, dass die kinetische Energie der Bruchstücke $E_k$ in etwa proportional zur potentiellen Energie $E_p$ des Füllgases des Reifens ist:

$$(\text{Gl. 2}) \qquad\qquad E_k \sim E_p$$

Dies wiederum hat zur Folge, dass eine Halbierung des Gasvolumens im Reifen in etwa zu einer Halbierung der kinetischen Energie der Bruchstücke des Reifens bzw. der Felge führt. Dies hat folglich eine entsprechend geringere Schädigungswirkung der Bruchstücke im Fall eines Impacts zur Folge.

Erfindungsgemäß erfolgt die Verringerung des wirksamen Gasvolumens durch einen Verdrängungskörper, der in das mit Druck beaufschlagte Gasvolumen des Reifens eingebracht wird.

Der Verdrängungskörper wird vom Fachmann in geeigneter Weise dimensioniert, so dass er den größtmöglichen Anteil des Gasvolumens im Reifenhohlraum einnimmt, jedoch bezüglich seiner Form und seiner Größe so dimensioniert ist, dass im Betrieb des Rades in Abhängigkeit von der verwendeten Felgen- und Reifengeometrie und des üblicherweise eingesetzten Gasdruckes im Wesentlichen kein Kontakt zwischen dem Verdrängungskörper und dem Reifen selbst erfolgt. Die geeignete Dimensionierung der Abmessungen bzw. des Volumens des Verdrängungskörpers sowie seine Verbindung mit der Felge ohne Kontakt mit dem Reifen, so dass im normalen Betrieb des Reifens kein Kontakt zwischen dem Verdrängungskörper und der Reifenwandung erfolgt, hat zur Folge, dass die Lauf- und Dämpfungseigenschaften des ursprünglichen Reifens im Wesentlichen erhalten bleiben, während gleichzeitig der größtmögliche Anteil des Gasvolumens durch den Verdrängungskörper ausgefüllt wird, um die im Gasvolumen enthaltene potentielle Druckenergie zu minimieren. Dadurch wird im Falle eines Reifen- oder Felgenversagens auch die kinetische Energie der entstehenden Bruchstücke wirksam verringert.

Erfindungsgemäß nimmt der Verdrängungskörper typischerweise bis zu 90 % des unter Druck stehenden Gasvolumens in dem Reifen ein, typischerweise zwischen ca. 10 % und ca. 90%.

Dabei ist der Verdrängungskörper lediglich mit der Felge, nicht aber mit der Innenseite des Reifens verbunden. Das Material des Verdrängungskörpers ist für die vorliegende Erfindung nicht kritisch. Geeignete Materialien können elastisch oder auch starr sein, vollständig geschlossen oder porös. Erfindungsgemäß bevorzugt ist es, wenn das Material des Verdrängungskörpers ein möglichst großes Volumen einnimmt, besonders bevorzugt sollte es deshalb vollständig geschlossen sein.

In einer besonders bevorzugten Ausführungsform der vorliegenden Erfindung sind Verdrängungskörper und Felge einstückig als integrales Bauteil ausgebildet. Hierbei kann der Verdrängungskörper aus einem beispielsweise auf der Lauffläche der Felge schlauchartig aufgeschweißten Metallstück bestehen, das ein möglichst großes Volumen des Reifenhohlraums einnimmt, wobei der Verdrängungskörper in seinem Inneren selbst hohl sein kann. Die Verbindung zwischen Verdrängungskörper und Felge ist hierbei gasdicht auszugestalten.

Die erfindungsgemäße Lösung bietet eine ganze Reihe von Vorteilen:

Die Ursache der Gefährdung durch Impactschäden von Reifen- und Felgenbruchstücken wird an ihrer Quelle verringert. Hierdurch wird vermieden, dass sämtliche von möglichen Impactschäden betroffenen Bereiche massiv gegen Impactschäden geschützt werden müssen, wie dies bei der Beibehaltung von herkömmlichen Reifenkonstruktionen der Fall wäre.

Bei Luftfahrzeugen wäre ein Schutz der betroffenen Bereiche durch deren Größenausdehnung (große Teile des Rumpfbereichs, der Flügelunterseite, des Hochauftriebssystems, der Fahrwerke und der Triebwerke) nur mit einer erheblichen Zunahme des Strukturgewichts erreichbar.

Die erfindungsgemäße Lösung hat demgegenüber keinen oder nur geringen Einfluss auf das Gewicht des Luftfahrzeugs.

In anderen Anwendungsgebieten, wie z. B. Einsatzfahrzeugen für Chemieanlagen, ist der Schutz durch die Größe und Ausdehnung der gefährdeten Anlagenteile praktisch unmöglich. Durch den erfindungsgemäß verfolgten Ansatz, die Ursache für die Impactschäden an ihrer Quelle zu minimieren, sind die erforderlichen Maßnahmen auf das im Vergleich zur Größe der gefährdeten Bereiche sehr kleine Druckvolumen der Reifen beschränkt. Hierdurch wird der Aufwand für die Sicherheitsmaßnahme ebenfalls minimiert.

Ferner werden erfindungsgemäß gleichzeitig die Auswirkungen von Impactschäden durch Bruchstücke sowohl von Reifen als auch von Felgen vermindert, nicht nur die Auswirkung von Reifenschäden allein, wie dies beispielsweise in der EP 1186448 beschrieben ist.

Darüber hinaus ist die Funktionsweise der vorliegenden Erfindung im Wesentlichen unabhängig von Fertigungstoleranzen und einer Energieversorgung sowie auch von der Funktion anderer mechanischer, elektromechanischer und elektronischer Systeme, die wiederum selbst ausfallgefährdet sind.

Der zum Betrieb des Reifens notwendige Druck kann unverändert bleiben. Darüber hinaus müssen die zur Zeit existierenden Konstruktions- und Fertigungsprinzipien für mit einem unter Überdruck stehenden gasgefüllten Reifen nicht abgeändert werden.

Die erfindungsgemäße Lösung kann ferner in bereits gebaute und betriebene Fahrzeuge, wie Luftfahrzeuge oder Landfahrzeuge, nachgerüstet werden.

Ferner hat die erfindungsgemäße Lösung den Vorteil, dass der Verdrängungskörper im normalen Betrieb keine Beeinträchtigung der Lauf- und Dämpfungseigenschaften des Reifens hervorruft, da er die Reifenwandung nicht berührt.

Das Anwendungsgebiet für die vorliegende Erfindung sind alle gasgefüllten Reifen von Fahrzeugen, wie Luftfahrzeuge oder Landfahrzeuge, speziell in sicherheitskritischen Anwendungen, wo Schäden durch Reifenplatzen und Felgenbruch zum Teil katastrophale Auswirkungen haben können.

Hierzu zählen beispielsweise Luftfahrzeuge, deren luftgefüllte Reifen beim Platzen während des Starts, der Landung oder auch im Flug große Bereiche der Flugzeugzelle mit sicherheitskritischen Strukturen oder Systemen beschädigen können. Bei den sicherheitskritischen Strukturen sind vor allem der mit Innendruck beaufschlagte Rumpf mit der Passagierkabine und der mit Treibstoff gefüllte Flügel zu nennen. Die gefährdeten sicherheitskritischen Systeme umfassen u. a. alle im gefährdeten Bereich verlaufenden elektrischen, hydraulischen und treibstoffführenden Leitungen, die kompletten Fahrwerke selbst, die Triebwerke sowie das vollständige Hochauftriebssystem mit Antriebssträngen, Sensoren, Supportstruktur, den eigentlichen Landeklappen und den Vorflügeln.

Ein weiteres Anwendungsgebiet der vorliegenden Erfindung sind Fahrzeuge, die in sicherheitskritischen Bereichen, wie z. B. Industrie- oder Chemieanlagen, operieren. Auch hier können platzende Reifen bzw. gebrochene Felgen und ihre umherfliegenden Bruchstücke Schäden mit unter Umständen großer Folgewirkung hervorrufen.

Darüber hinaus ist eine Anwendung der vorliegenden Erfindung bei Katastrophenschutzfahrzeugen denkbar, wie z. B. bei Feuerwehrfahrzeugen, die häufig unter Bedingungen eingesetzt werden, die durch reifenschädigende Gegenstände auf dem Untergrund sowie ggf. erhöhte Temperaturen gekennzeichnet sind, wo gleichzeitig Personal im durch Reifen- oder Felgenbruchstücke gefährdeten Bereich arbeiten muss.

In diesen Anwendungsgebieten kann die hier vorgestellte Erfindung die schädigenden Auswirkungen der durch Reifenplatzen oder Felgenbruch erzeugten Bruchstücke stark verringern und die entstehenden Impactschäden erheblich reduzieren.

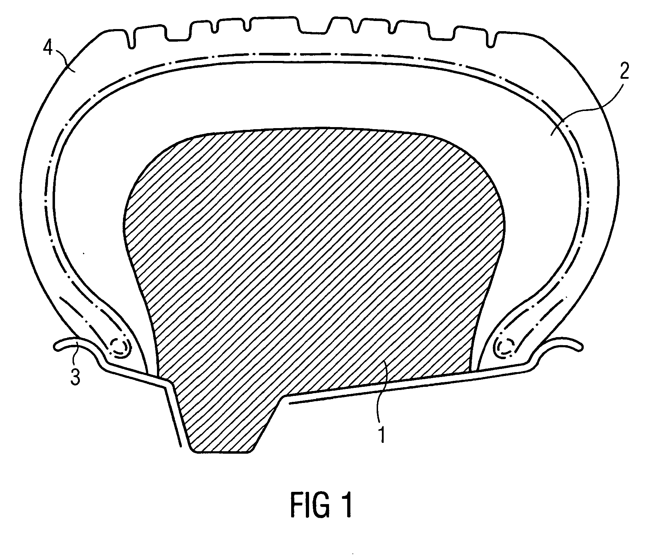

Anhand der beigefügten Figur 1 wird keine Ausführung der Erfindung dargestellt. Die beiliegende Figur 1 zeigt einen typischen Querschnitt durch einen pneumatischen Reifen mit eingebrachtem Verdrängungskörper. Der Verdrängungskörper 1 nimmt typischerweise zwischen etwa 10 % und etwa 90 % des unter Druck stehenden Gasvolumens 2 ein. Der Verdrängungskörper 1 ist im Inneren des Reifenhohlraums angeordnet und hierbei lediglich mit der Felge 3, nicht aber mit der Innenseite des Reifens 4, verbunden.

## Patentansprüche

1. Vorrichtung, geeignet zur Verringerung der Impactenergie von Reifen- und Felgenbruchstücken, umfassend eine Felge (3) mit einem darauf montierten Reifen (4), dessen Hohlraum mit einem Gasvolumen (2) gefüllt ist, wobei im Inneren des Reifenhohlraums ein mit der Felge (3) verbundener Verdrängungskörper (1) angeordnet ist, und wobei der Verdrängungskörper (1) keinen Kontakt zum Reifen (4) aufweist, **dadurch gekennzeichnet, dass** die Verbindung zwischen Verdrängungskörper (1) und Felge (3) als gasdichte Schweißverbindung ausgestaltet ist.

2. Vorrichtung nach Anspruch 1, wobei der Verdrängungskörper (1) geeignet dimensioniert ist, um den größtmöglichen Anteil des Gasvolumens (2) im Reifenhohlraum einzunehmen und gleichzeitig im Betrieb der Vorrichtung an Fahrzeugen im Wesentlichen kein Kontakt zwischen dem Verdrängungskörper (1) und dem Reifen (4) erfolgt.

3. Vorrichtung nach Anspruch 1 oder 2, wobei der Verdrängungskörper bis zu 90% des unter Druck stehenden Gasvolumens in dem Reifen einnimmt.

4. Vorrichtung nach Anspruch 2, wobei das Fahrzeug aus Luftfahrzeugen und Landfahrzeugen ausgewählt ist.

5. Verwendung einer Vorrichtung zur Verringerung der Impactenergie von Reifen-und Felgenbruchstücken nach einem der Ansprüche 1 - 4 in einem Flugzeugreifen.

## Claims

1. Apparatus, being adapted for decreasing the impact energy of tire and rim fractions, comprising a rim (3) with a tire (4) mounted thereon, whose cavity is filled with a gas volume (2), wherein in the inside of the tire cavity a displacement body (1) connected with the rim (3) is arranged, and wherein the displacement body (1) has no contact to the tire (4), **characterized in that** the connection between the displacement body (1) and the rim (3) is formed as a gas tight welded connection.

2. The apparatus of claim 1, wherein the displacement body (1) is suitably dimensioned to capture the largest possible part of the gas volume (2) inside the tire cavity, and simultaneously, in the operation of the apparatus at vehicles, substantially no contact between the displacement body (1) and the tire (4) occurs.

3. The apparatus of claim 1 or 2, wherein the displacement body captures up to 90 % of the gas volume under pressure inside the tire.

4. The apparatus of claim 2, wherein the vehicle is chosen from aircrafts and land crafts.

**5.** Use of an apparatus for decreasing the impact energy of tire and rim fractions of one of the claims 1 to 4 in an aircraft tire.

**Revendications**

**1.** Dispositif approprié pour réduire l'énergie d'impact de fragments de pneumatique et de jante, comportant une jante (3) sur laquelle est monté un pneumatique (4) dont la cavité est remplie d'un volume de gaz (2), dans lequel un corps de déplacement (1) assemblé à la jante (3) est agencé à l'intérieur de la cavité du pneumatique, et dans lequel le corps de déplacement (1) n'a aucun contact avec le pneumatique (4), **caractérisé en ce que** l'assemblage entre le corps de déplacement (1) et la jante (3) est conçu comme un assemblage soudé étanche aux gaz.

**2.** Dispositif selon la revendication 1, dans lequel le corps de déplacement (1) est dimensionné de manière appropriée afin d'occuper la plus grande partie possible du volume de gaz (2) dans la cavité du pneumatique et simultanément pratiquement aucun contact n'est établi entre le corps de déplacement (1) et le pneumatique (4) pendant le fonctionnement du dispositif sur des véhicules.

**3.** Dispositif selon la revendication 1 ou 2, dans lequel le corps de déplacement occupe jusqu'à 90 % du volume de gaz mis sous pression dans le pneumatique.

**4.** Dispositif selon la revendication 2, dans lequel le véhicule est choisi parmi des aéronefs et des véhicules terrestres.

**5.** Utilisation d'un dispositif pour réduire l'énergie d'impact de fragments de pneumatique et de jante selon l'une des revendications 1 à 4 dans un pneumatique d'avion.

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1186448 A
- EP 0912354 B1
- FR 1322887
- FR 2013313
- FR 369680
- DE 7201425 U
- DE 2544474 A
- DE 952770
- DE 316621